# EUROPEAN PATENT APPLICATION

(11) **EP 4 755 234 A1**
(43) Date of publication of application: **10.06.2026**
(21) Application number: 24849517.8
(22) Date of filing: 26.07.2024
(51) Int. Cl.: A24F 40/95, A24F 40/42, A24F 40/46, A24F 40/50, A24F 40/57, H02J 7/00

(54) **AEROSOL-GENERATING DEVICE AND OPERATION METHOD THEREOF**

(30) Priority: 01.08.2023 KR 20230100357; 17.10.2023 KR 20230138869
(71) Applicant: KT&G Corporation, Daedeok-gu Daejeon 34337 (KR)
(72) Inventor: PARK, Sang Cheol, Suwon-si, Gyeonggi-do 16469 (KR); KIM, Jae Hyuk, Seoul 06352 (KR); SEO, Jang Won, Daejeon 34023 (KR); WOO, Young Min, Hwaseong-si, Gyeonggi-do 18391 (KR); LEE, Won Kyeong, Guri-si, Gyeonggi-do 11920 (KR); JANG, Chul Ho, Bucheon-si, Gyeonggi-do 14725 (KR); JUNG, Jin Chul, Daejeon 34079 (KR); HAN, Dae Nam, Seoul 06331 (KR)
(74) Representative: Ter Meer Steinmeister & Partner
(86) International application number: PCT/KR2024/010944
(87) International publication number: WO 2025/028948

(57) **Abstract**

An aerosol generating device includes a housing including a battery accommodation space, a heater located inside the housing and configured to heat an aerosol generating material, a battery detachably coupled to the battery accommodation space and configured to supply power to the heater, a printed circuit board disposed inside the housing and spaced apart from the battery accommodation space, and a battery protection circuit disposed on the printed circuit board and electrically connected to the battery when the battery is coupled to the battery accommodation space to control charging or discharging of the battery.

## Description

### Technical Field

Embodiments relate to an aerosol generating device including a detachable battery and a battery protection circuit separate from the battery.

### Background Art

The demand for aerosol generating devices that produce aerosols through a non-combustion method, instead of burning cigarettes to generate aerosols, is increasing. An aerosol generating device, for example, is a device that generates aerosols from an aerosol generating material using a non-combustion method and supplies them to the user, or generates flavored aerosols by passing vapor produced from the aerosol generating material through a flavoring medium.

An aerosol generating device may include a battery supplying power and a heater generating heat as power is supplied thereto and may generate aerosols by heating an aerosol generating material through the heater.

Existing aerosol generating devices generally include an integrated battery to miniaturize the overall size of the device and increase a design degree of the device. However, recently, research on aerosol generating devices using detachable batteries has increased in an attempt to improve user convenience by increasing the use time of aerosol generating devices.

### Disclosure of Invention

### Technical Problem

An aerosol generating device generally uses a battery and a battery pack including a battery protection circuit (or a protection circuit module (PCM)) for preventing overcharge, over-discharge, or overcurrent of the battery.

When the aerosol generating device uses the battery pack including the battery and the battery protection circuit, even though the battery protection circuit is able to normally operate, the battery pack needs to be replaced with a new battery pack when the lifespan of the battery ends. In other words, even though the lifespan of the battery protection circuit is longer than that of the battery, the aerosol generating device using the existing battery pack needs to discard the battery protection circuit that is able to normally operate, which may increase battery replacement costs.

Various embodiments of the present disclosure provide an aerosol generating device capable of reusing a battery protection circuit even when a battery is separated from the battery protection circuit and discarded or replaced, thereby reducing battery replacement costs and allowing various types of batteries to be used for an operation of the aerosol generating device.

The technical problems of the present disclosure are not limited to the above-described description, and other technical problems may be clearly understood by one of ordinary skill in the art from the embodiments to be described hereinafter.

### Solution to Problem

According to an embodiment, an aerosol generating device includes a housing including a battery accommodation space, a heater located inside the housing and configured to heat an aerosol generating material, a battery detachably coupled to the battery accommodation space and configured to supply power to the heater, a printed circuit board disposed inside the housing and spaced apart from the battery accommodation space, and a battery protection circuit disposed on the printed circuit board and electrically connected to the battery when the battery is coupled to the battery accommodation space to control charging or discharging of the battery.

According to an embodiment, a method of operating an aerosol generating device includes detecting a type of a battery coupled to a battery accommodation space of the aerosol generating device based on charging or discharging characteristics of the battery detachably coupled to the battery accommodation space, and controlling charging or discharging of the battery through a battery protection circuit electrically connected to the battery when the battery is coupled to the battery accommodation space based on the detected type of the battery.

### Advantageous Effects of Invention

The aerosol generating device various embodiments of the present disclosure may reuse the battery protection circuit even when the battery is discarded or replaced.

In addition, the aerosol generating device various embodiments of the present disclosure may allow various types of batteries to be used and prevent overcharge or over-discharge of various types of batteries.

However, effects of the embodiments are not limited to the above-described effects, and effects not mentioned may be clearly understood by one of ordinary skill in the art to which the embodiments

### Brief Description of Drawings

FIG. 1 is a perspective view illustrating an aerosol generating device according to an embodiment.
FIG. 2 is a diagram for explaining an aerosol generating device according to an embodiment.
FIG. 3 is a diagram for explaining an aerosol generating device according to another embodiment.
FIG. 4 is a diagram for explaining an aerosol generating device according to another embodiment.
FIG. 5 is a diagram for explaining an aerosol generating device according to another embodiment.
FIG. 6 is a diagram for explaining an aerosol generating device according to another embodiment.
FIG. 7 is an exploded perspective view of some components of an aerosol generating device according to an embodiment.
FIG. 8 is a diagram for explaining an electrical connection relationship between a battery, a battery protection circuit, and a processor of the aerosol generating device shown in FIG. 7.
FIG. 9 is a flowchart for explaining operations of detecting a type of a battery of an aerosol generating device and controlling charging or discharging of the battery according to an embodiment.
FIG. 10 is a graph illustrating a voltage change of various types of batteries over time when the batteries are discharged.
FIG. 11 is a flowchart for explaining operations of an aerosol generating device to control charging or discharging of a battery based on a discharge rate of the battery according to an embodiment.
FIG. 12 is a flowchart for explaining operations of an aerosol generating device to control charging or discharging of a battery based on a charging rate of the battery according to another embodiment.
FIG. 13 is a block diagram of an aerosol generating device according to an embodiment.

### Mode for the Invention

Regarding the terms in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, terms which can be arbitrarily selected by the applicant in particular cases. In such a case, the meaning of the terms will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

In addition, when describing the embodiments of the disclosure, the detailed description of the related known art, which may obscure the subject matter of the embodiments, may be omitted. Also, the accompanying drawings are only intended to facilitate understanding of the embodiments described herein, and the spirit of the disclosure is not limited by the accompanying drawings and should be understood to include all changes, equivalents or alternatives included in the spirit and scope of the disclosure.

Although the terms first, second, etc. may be used herein to describe various elements or components, these elements or components should not be limited by these terms. These terms are only used to distinguish one element or component from another element or component.

When an element is referred to as being "connected to" or "coupled to" another element, it may be directly connected or coupled to the other element or intervening elements may be present. In contrast, when an element is referred to as being "directly connected to" or "directly coupled to" another element, there are no intervening elements present.

The singular forms are intended to include the plural forms as well, unless the context clearly indicates otherwise.

Hereinafter, the present disclosure will now be described more fully with reference to the accompanying drawings, in which exemplary embodiments of the present disclosure are shown such that one of ordinary skill in the art may easily work the present disclosure. However, the present disclosure may be implemented in various different forms and is not limited to the embodiments described herein.

The same or similar components will be assigned the same reference numerals regardless of the reference numerals in the drawings, and the same descriptions thereof will be omitted.

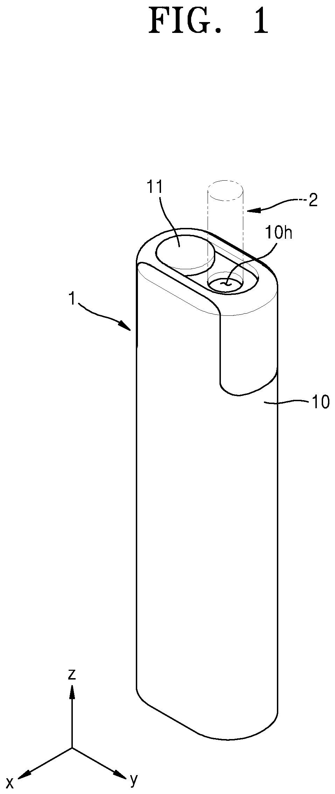

FIG. 1 is a perspective view illustrating an aerosol generating device according to an embodiment.

The aerosol generating device 1 can generate and provide aerosols..

The aerosol generating device 1 may include a main body 10. The main body 10 forms the overall exterior of the aerosol generating device 1 and may include an internal space. At least one of an article accommodation portion 10h, a heater (not shown), a controller (not shown) and a battery (not shown) may be arranged inside the main body 10.

The article accommodation portion 10h may provide a space where an aerosol-generating article 2 can be detachably coupled or inserted. The aerosol generating article 2 may include an aerosol generating material that is heated by the heater to produce an aerosol. The article accommodation portion 10h may provide a space opened toward the exterior of the main body 10 to allow the aerosol generating article 2 to the inserted thereinto.

The article accommodation portion 10h may be formed by being recessed toward the interior of the main body 10 so that at least a part of the aerosol generating article 2 may be inserted into the insertion space. The depth of the article accommodation portion 10h may correspond to a length of a region in the aerosol generating article 2 including an aerosol generating material and/or a medium. A portion of the aerosol generating article 2 may be inserted into the main body 10, and another portion of the aerosol generating article 2 may protrude to the outside of the main body 10. A user may inhale air by holding, in the mouth, the portion of the aerosol generating article 2 exposed to the outside.

The main body 10 may further include a cover 11 for opening or closing the article accommodation portion 10h. The cover 11 may be movably disposed on the main body 10 to expose the article accommodation portion 10h to the outside of the aerosol generating device 1 or cover the article accommodation portion 10h to prevent the article accommodation portion 10h from being exposed to the outside of the aerosol generating device 1. For example, the cover 11 may open the article accommodation portion 10h at a first position so that the article accommodation portion 10h is exposed to the outside, thereby allowing the aerosol generating article 2 to be inserted into the article accommodation portion 10h. In addition, the cover 11 may move from the first position to a second position and close the article accommodation portion 10h to prevent the article accommodation portion 10h from being exposed to the outside, thereby protecting the article accommodation portion 10h from an external impact or inflow of external foreign substances.

The heater (not shown) disposed inside the main body 10 may heat the aerosol-generating article 2. For example, the heater may include at least one of a tube-type heater, a plate-type heater, a needle-type heater and a rod-type heater. The heater may include an electrically resistive heater and/or an induction heater.

For example, the heater may be a resistive heater. The heater may include an electrically conductive track, and be heated as a current flows through the electrically conductive track. The heater may be electrically connected to a power source. The heater may generate heat by receiving a current from the power source.

For example, the heater may be a multiple heater. The heater may include a first heater and a second heater. The first heater and the second heater may be heated sequentially or simultaneously.

The aerosol generating device 1 may include an induction coil. The induction coil may make the heater generate heat. The heater may include a susceptor. The susceptor may generate heat by a magnetic field generated by an AC current flowing through the induction coil. The magnetic field may penetrate the susceptor and generate an eddy current within the the susceptor. The eddy current may make the susceptor geneatre heat.

In another example, the susceptor may be included inside the aerosol generating article 2. The susceptor inside the aerosol generating article 2 may generate heat by a magnetic field generated by an AC current flowing through the induction coil. The susceptor may be disposed inside the aerosol generating article 2 and may not be electrically connected to the aerosol generating device. The susceptor may be inserted into the article accommodation portion 10h together with the aerosol generating article 2 and may be removed from the article accommodation portion 10h together with the aerosol generating article 2. When an AC current flows through the induction coil, the aerosol generating article 2 may be heated by the susceptor inside the aerosol generating article 2.

The power source may supply power such that the components of the aerosol-generating device 1 operate. The power source may be a battery capable of storing electric power. The power source may provide electric power to components such as the heater, the induction coil, and the controller.

The controller may control overall operations of the aerosol-generating device 1. The controller may be mounted on a printed circuit board (PCB). The controller may control an operation of at least one of the heater, the induction coil or the power supply. The controller may control the operation of components such as a display, an actuator (motor), etc. installed in the aerosol generating device 1. The controller may check a state of each of the components of the aerosol-generating device 1 to determine whether the aerosol-generating device 1 is in an operable state.

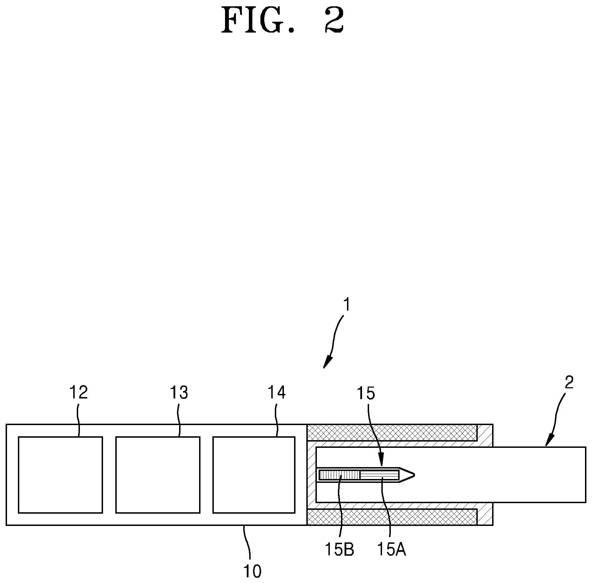

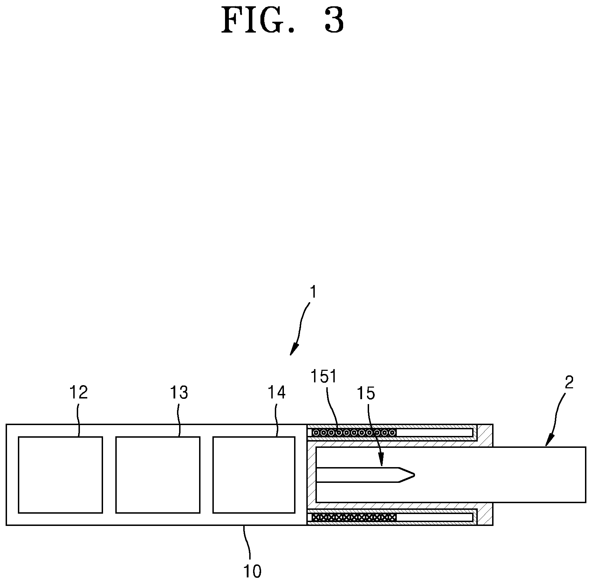

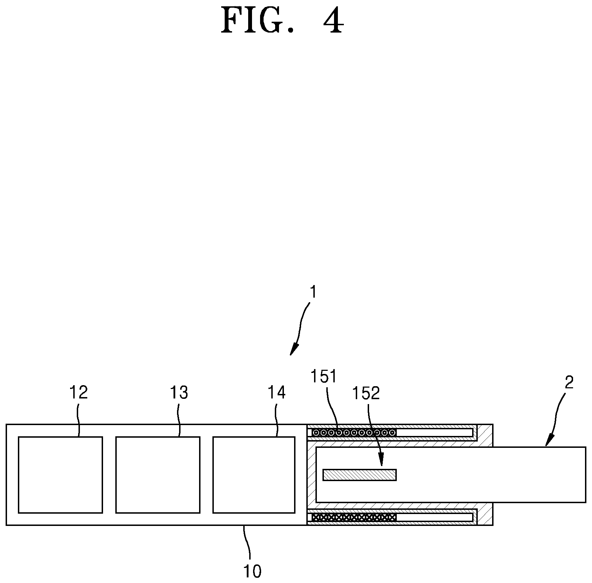

FIG. 2 is a diagram for explaining an aerosol generating device according to an embodiment. FIG. 3 is a diagram for explaining an aerosol generating device according to another embodiment. FIG. 4 is a diagram for explaining an aerosol generating device according to another embodiment.

Referring to FIG 2, the aerosol-generating device 1 according to an embodiment of the present disclosure may include at least one of a battery 12, a controller 13, a sensor unit 14, or a heater 15. At least one of the battery 12, the controller 13, the sensor unit 14, and the heater 15 may be disposed inside a main body 10 of the aerosol-generating device 1.

The main body 10 may provide a space opened toward one side to allow an aerosol generating article 2 to the inserted thereinto. The space opened toward the one side may be referred to as an article accommodation portion. The article accommodation portion may be formed by being recessed toward the interior of the main body 10 to a preset depth so that at least a part of the aerosol generating article 2 may be inserted into the insertion space. The depth of the article accommodation portion may correspond to a length of a region in the aerosol generating article 2 including an aerosol generating material and/or a medium. A lower end of the aerosol generating article 2 may be inserted into the main body 10, and an upper end of the aerosol generating article 2 may protrude to the outside of the main body 10. A user may inhale air by holding, in the mouth, the upper end of the aerosol generating article 2 exposed to the outside.

The heater 15 may heat the aerosol generating article 2. The heater 15 may extend outward in the longitudinal direction of the space where the aerosol generating article 2 is inserted. For example, the heater 15 may include at least one of a tube-type heater, a plate-type heater, a needle-type heater and a rod-type heater. The heater 15 may be inserted into one end of the aerosol generating article 2. The heater 15 may include an electrically resistive heater and/or an induction heater.

For example, referring to FIG. 2, the heater 15 may be a resistive heater. For example, the heater 15 may include an electrically conductive track, and be heated as a current flows through the electrically conductive track. The heater 15 may be electrically connected to the battery 12. The heater 15 may directly generate heat by receiving a current from the battery 12.

For example, the heater 15 may be a multiple heater. The heater may include a first heater 15A and a second heater 15B. The first heater 15A and the second heater 15B may be arranged side by side along the longitudinal direction. The first heater 15A and the second heater 15B may be heated sequentially or simultaneously.

For example, referring to FIG. 3, the aerosol-generating device 1 may include an induction coil 151 surrounding the heater 15. The induction coil 151 may make the heater 15 generate heat. The heater 15, which is a susceptor, may generate heat by a magnetic field generated by an AC current flowing through the induction coil 151. The magnetic field may penetrate the heater 15 and generate an eddy current within the heater 15. The current may generate heat in the heater 15. The current may generate heat in the heater 15.

For example, referring to FIG. 4, the susceptor 152 may be included inside the aerosol generating article 2, and the susceptor 152 inside the aerosol generating article 2 may generate heat by a magnetic field generated by an AC current flowing through the induction coil 151. The susceptor 152 may be disposed inside the aerosol generating article 2 and may not be electrically connected to the aerosol generating device. The susceptor 152 may be inserted into the article accommodation portion together with the aerosol generating article 2 and may be removed from the article accommodation portion together with the aerosol generating article 2. The aerosol generating article 2 may be heated by the susceptor inside the aerosol generating article 2. In this case, the aerosol generating device 1 may not be provided with a heater 15.

The battery 12 may supply power such that the components of the aerosol-generating device 1 operate. The battery 12 may supply power to at least one of the controller 13, the sensor unit 14, or the heater 15. The battery 12 may supply power to the induction coil 151.

The battery 12 may be a power source detachable from the aerosol generating device 1. For example, the battery 12 may be detachably coupled to a battery accommodation space (not shown) of the aerosol generating device 1, and may be electrically connected to a terminal of the battery accommodation space to supply power to the components of the aerosol generating device 1.

The aerosol generating device 1 may further include a charging interface for connecting the aerosol generating device 1 to an external power source. For example, the battery 12 may be electrically connected to the external power source (e.g., a charger) through the charging interface, and charged by power supplied from the external power source.

The controller 13 may control overall operations of the aerosol-generating device 1. The controller 13 may be mounted on a printed circuit board (PCB). The controller 13 may control an operation of at least one of the battery 12, the sensor unit 14 or the heater 15. The controller 13 may control the operation of the induction coil 151. The controller 13 may control the operation of components such as a display, an actuator (motor), etc. installed in the aerosol generating device 1. The controller 13 may check a state of each of the components of the aerosol-generating device 1 to determine whether the aerosol generating device 1 is in an operable state.

The controller 13 may analyze a result detected by the sensor unit 14 and control processes to be performed subsequently. For example, the controller 13 may control the power supplied to the heater 15 such that the operation of the heater 15 starts or ends based on a result detected by the sensor unit 14. For example, the controller 13 may control an amount of power supplied to the heater 15 and a time for which the power is supplied to the heater 15 such that the heater 15 may be heated to a preset temperature or maintained at an appropriate temperature based on the result detected by the sensor unit 14.

The sensor unit 14 may include at least one of a temperature sensor, a puff sensor, or an insertion detection sensor. For example, the sensor unit 14 may sense at least one of the temperature of the heater 15, the temperature of the battery 12, or the temperature inside and outside the main body 10. For example, the sensor unit 14 may sense a puff by the user. For example, the sensor unit 14 may sense whether the aerosol generating article 2 has been inserted into the insertion space. For example, the sensor unit 14 may sense a movement of the aerosol generating device 1.

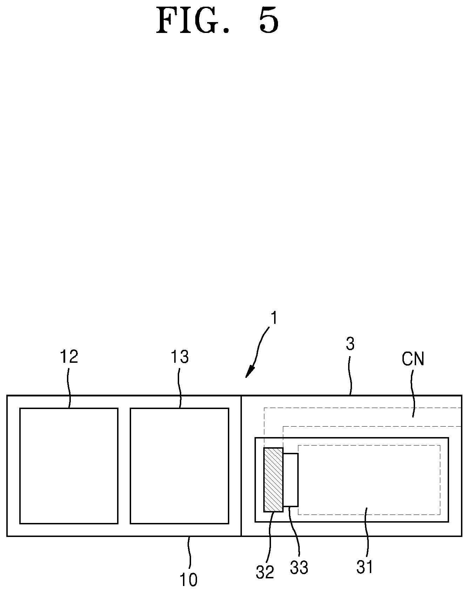

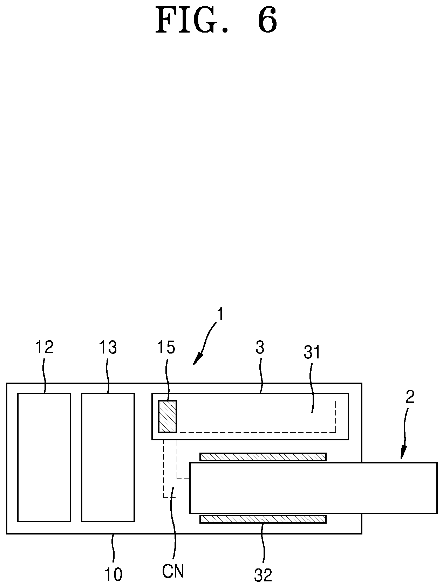

FIG. 5 is a diagram for explaining an aerosol generating device according to another embodiment. FIG. 6 is a diagram for explaining an aerosol generating device according to another embodiment.

Referring to FIG 5, the aerosol generating device 1 may include a cartridge 3 and the main body 10. The aerosol generating device 1 may include at least one of a battery 12, a controller 13 and a sensor (not shown). At least one of the battery 12 and the controller 13 may be arranged inside a main body 10 of the aerosol generating device 1. The main body 10 may be equipped with a cartridge 3 containing an aerosol generating material. The user may place a mouthpiece (not shown) provided at one end of the cartridge 3 in their mouth and inhale the aerosol.

The cartridge 3 may contain an aerosol generating material in any one of a liquid state, a solid state, a gaseous state, a gel state, and the like within a storage space 31. The aerosol generating material may include a liquid composition. For example, the liquid composition may be a liquid including a tobacco-containing material having a volatile tobacco flavor component, or a liquid including a non-tobacco material.

The cartridge 3 may be detachably coupled to the main body 10. The cartridge 3 may be mounted to the main body 10 by being coupled to the main body 10.

The main body 10 may be formed in a structure in which external air may be introduced into the main body 10 while the cartridge 3 is coupled to the main body 10. Here, the external air introduced into the main body 10 may pass through the cartridge 3 and flow into the mouth of the user.

The cartridge 3 may include a storage space 31 containing the aerosol generating material and/or a generation unit 32 The generation unit 32 may heat the aerosol generating material inside the storage space 31. The cartridge 3 may include a liquid delivery element 33 capable of absorbing the aerosol generating material. Here, the liquid delivery element 33 may include a wick or the like such as a cotton fiber, a ceramic fiber, a glass fiber, or porous ceramic. An electrically conductive track of the generation unit 32 may be formed in a coil-shaped structure that is wound around the liquid delivery element or in a structure in contact with one side of the liquid delivery element 33. The generation unit 32 may be referred to as 'a cartridge heater'.

The cartridge 3 may generate an aerosol. When the liquid delivery element 33 is heated by the generation unit 32 an aerosol may be generated. The aerosol may be inhaled into the mouth of the user through an air flow channel CN.

The air flow channel CN may be provided in the cartridge 3. The air flow channel CN may connect the generation unit 32 of the cartridge 3 to the exterior of the cartridge 3. One end of the air flow channel CN may be open to the generation unit 32, while the other end may be connected to the exterior. For example, the air flow channel CN may extend along the longitudinal direction of the cartridge 3 from the one side of the storage space 31 of the cartridge 3. For example, the air flow channel CN may pass through the cartridge 3 and extend along the longitudinal direction of the cartridge 3.

Referring to FIG 6, the aerosol generating device 1 according to an embodiment may accommodate the aerosol generating article 2. For example, the aerosol generating article 2 may be accommodated in the cartridge 3. As another example, the aerosol generating article 2 may be accommodated in the main body 10.

The aerosol generating article 2 may allow the aerosol generated by the generation unit 32 to pass through. The aerosol generating device 1 may include an article accommodation portion that accommodates the aerosol generating article 2. The aerosol generated inside the generation unit 32 may pass through the aerosol generating article 2 accommodated in the article accommodation portion and be discharged to the exterior of the aerosol generating device 1. At this time, the user may place their mouth on the aerosol generating article 2 and inhale the aerosol discharged to the exterior of the aerosol generating device 1 through the aerosol generating article 2.

Referring to FIG 6, the aerosol generating device 1 further include a heater 15 for heating the aerosol generating article 2. The heater 15 may heat the aerosol generating article 2. The heater 15 may extend longitudinally upward around the space into which the aerosol generating article 2 is inserted.

The heater 15 may include an electrically resistive heater and/or an induction heater.

The controller 13 may control overall operations of the aerosol-generating device 1. The controller 13 may be mounted on a printed circuit board (PCB). The controller 13 may control an operation of at least one of the cartridge 3, the battery 12 or the sensor. For example, the controller 13 may control the operation of components such as a display (not shown), an audio output device (not shown), a haptic unit (not shown), and an actuator (motor) (not shown), etc. installed in the aerosol generating device 1. The controller 13 may check a state of each of the components of the aerosol-generating device 1 to determine whether the aerosol generating device 1 is in an operable state.

The controller 13 may analyze a result detected by the sensor and control processes to be performed subsequently. For example, the controller 13 may control the power supplied to the generation unit 32 such that the operation of the generation unit 32 starts or ends based on a result detected by the sensor. For example, the controller 13 may control an amount of power supplied to the generation unit 32 and a time for which the power is supplied to the generation unit 32 such that the generation unit 32 may be heated to a certain temperature or maintained at an appropriate temperature based on the result detected by the sensor.

The battery 12 may supply power to the components of the aerosol-generating device 1. For example, the battery 12 may supply electrical power to at least one of the controller 13, the sensor (not shown), or the heater 15.

The sensor may include at least one of a temperature sensor, a puff sensor, a cartridge detection sensor or a movement detection sensor. For example, the sensor may sense at least one of the temperature of the generation unit 32, the temperature of the battery 12, or the temperature inside and outside the main body 10. For example, the sensor may sense a puff by the user. For example, the sensor may sense whether the cartridge 3 is mounted. For example, the sensor may sense a movement of the aerosol generating device 1.

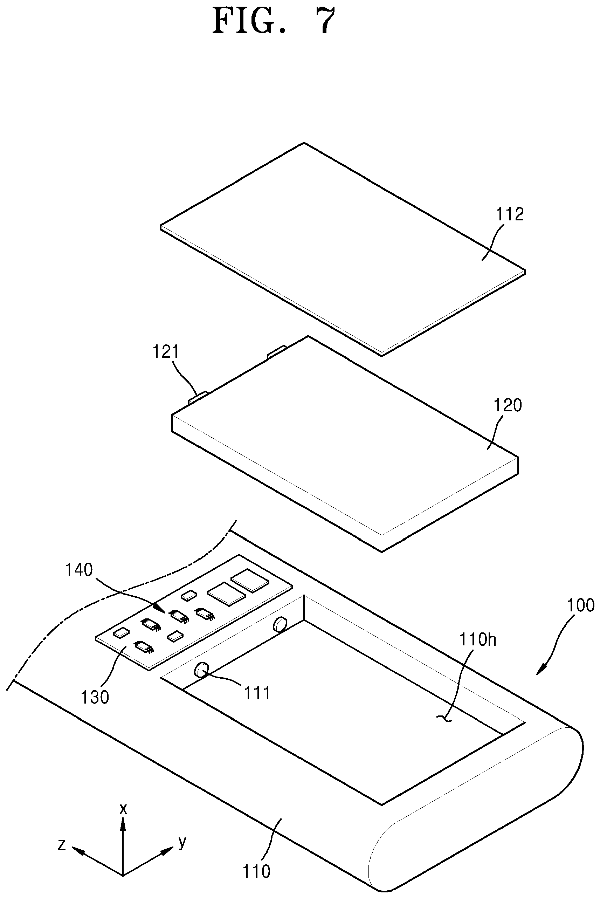

FIG. 7 is an exploded perspective view of some components of an aerosol generating device according to an embodiment. Although only a housing 110, a battery 120, and a battery cover 112 of an aerosol generating device 100 are illustrated in FIG. 7, the components of the aerosol generating device 100 are not limited to the components illustrated in the drawings.

Referring to FIG. 7, the aerosol generating device 100 according to an embodiment may include the housing 110, the battery cover 112, the battery 120, and a battery protection circuit 140. The aerosol generating device 100 may be an embodiment of the aerosol generating device 1 of FIGS. 1 to 6, and a redundant description thereof will be omitted below.

The housing 110 may form an overall appearance of the aerosol generating device 100, and components of the aerosol generating device 100 may be disposed in the housing 110. For example, a heater (e.g., the heater 15 of FIG. 2, 3, and 5) or a generator (e.g., generator 32 of FIG. 5) heating an aerosol generating material and generating an aerosol and a generation unit (the generation unit 32 of FIG. 5) and a processor (e.g., the controller 13 of FIGS. 2 to 6) may be disposed in the housing 110, but are not limited thereto.

According to an embodiment, the housing 110 may include a battery accommodation space 110h accommodating the battery 120. For example, the battery accommodation space 110h may be formed in one region of the housing 110 (e.g., a region facing the x direction) and accommodate the battery 120, but a position of the battery accommodation space 110h is not limited thereto.

At least one terminal 111 may be disposed in the battery accommodation space 110h and may contact an electrode 121 of the battery 120 when the battery 120 is coupled to or accommodated in the battery accommodation space 110h. Only an embodiment in which two terminals 111 are disposed on side surfaces of the battery accommodation space 110h is illustrated in the drawing, but an arrangement structure or the number of the at least one terminal 111 is not limited thereto.

The battery 120 may be detachably coupled to the battery accommodation space 110h of the housing 110, and may supply power for operating the components of the aerosol generating device 100. For example, when the battery 120 is coupled to the battery accommodation space 110h, the electrode 121 of the battery 120 may contact the at least one terminal 111, and accordingly, the battery 120 and the components (e.g., the heater and the processor) of the aerosol generating device 100 may be electrically connected to each other. The battery 120 may supply power to the electrically connected components of the aerosol generating device 100 and operate the components of the aerosol generating device 100.

According to an embodiment, the aerosol generating device 100 may further include the battery cover 112 fixing the battery 120 to the battery accommodation space 110h. The battery cover 112 may be detachably coupled to the housing 110, and may open or close the battery accommodation space 110h. For example, when the battery cover 112 is detached from the housing 110, the battery accommodation space 110h may be exposed to the outside of the aerosol generating device 100 so that the battery 120 may be coupled to the battery accommodation space 110h. In another example, when the battery cover 112 is coupled to the housing 110, the battery accommodation space 110h may be covered by the battery cover 112 and not be exposed to the outside, and the battery 120h accommodated in the battery accommodation space 110h may be fixed inside the battery accommodation space 110h by the battery cover 112.

According to another embodiment, the aerosol generating device 100 may further include a fixing member (not shown) disposed in the battery accommodation space 110h and fixing the detachable battery 120 to the battery accommodation space 110h. In this case, the aerosol generating device 100 may fix the battery 120 to the battery accommodation space 110h without the battery cover 112, and the battery 120 may form the appearance of the aerosol generating device 100 together with the housing 110.

When the battery 120 is coupled to the battery accommodation space 110h, the battery protection circuit 140 (or a protection circuit module (PCM) may be electrically connected to the battery 120 and protect and/or manage the battery 120. For example, the battery protection circuit 140 may be disposed to be electrically connected to the at least one terminal 111. Accordingly, when the battery 120 is coupled to the battery accommodation space 110h, the battery protection circuit 140 may be electrically connected to the battery 120 contacting the at least one terminal 111.

In an example, the battery protection circuit 140 may block overcharging of the battery 120 during charging of the battery 120 and prevent explosion of the battery 120 due to overcharging. In another example, the battery protection circuit 140 may prevent over-discharge of the battery 120 or overcurrent from flowing into the battery 120 and prevent malfunction or damage of the battery 120.

According to an embodiment, the battery protection circuit 140 may be disposed on a printed circuit board 130 disposed in one region of the housing 110 adjacent to the battery accommodation space 110h. The printed circuit board 130 may be disposed in one region of the housing 110 spaced apart from a heater (not shown), and thus the battery protection circuit 140 may also be spaced apart from the heater by a certain distance. In the present disclosure, the 'certain distance' may mean a minimum distance at which the battery protection circuit 140 may not be affected by heat generated by the heater. The aerosol generating device 100 according to an embodiment may prevent malfunction or damage of the battery protection circuit 140 by the heater through a structure in which the battery protection circuit 140 is spaced apart from the heater by the certain distance.

The aerosol generating device 100 according to an embodiment may continuously use the battery protection circuit 140 even when the battery 120 is replaced through a structure in which the battery 120 and the battery protection circuit 140 are physically separated from each other.

The existing aerosol generating device generally use a battery pack in which the battery 120 and the battery protection circuit 140 are integrated, but when using the battery pack, even though the battery protection circuit 140 is able to operate normally, the battery pack needs to be replaced with a new battery pack when the lifespan of the battery 120 ends, which may cause high costs when the battery pack is replaced.

On the other hand, the aerosol generating device 100 according to an embodiment may recycle the battery protection circuit 140 even when the battery 120 is replaced or discarded through a structure in which the battery 120 and the battery protection circuit 140 are separated from each other, thereby reducing replacement costs of the battery 120.

In addition, the battery protection circuit 140 is necessary for stable use of the battery 120, and in the aerosol generating device 100 according to an embodiment, one battery protection circuit 140 may protect various types of batteries through a structure in which the battery 120 and the battery protection circuit 140 are separated from each other, thereby allowing a user to use various types of batteries in addition to specified batteries.

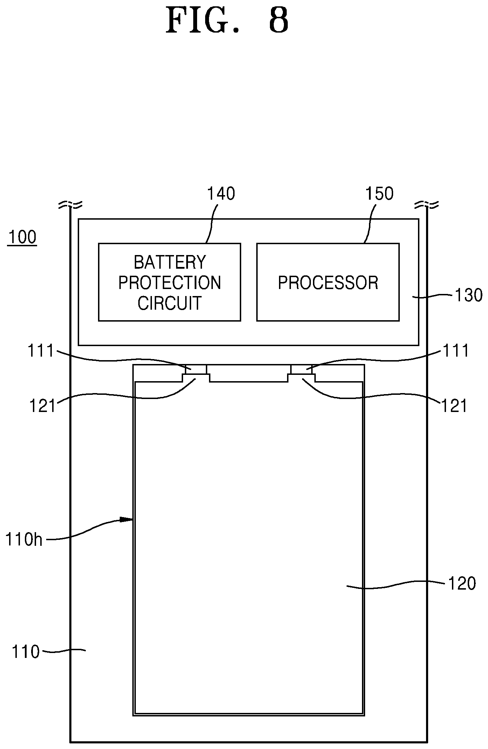

Hereinafter, a structure in which the battery 120 and the components of the aerosol generating device 100 are electrically connected to each other when the battery 120 is coupled to the battery accommodation space 110h will be described in detail with reference to FIG. 8.

FIG. 8 is a diagram for explaining an electrical connection relationship between a battery, a battery protection circuit, and a processor of the aerosol generating device shown in FIG. 7.

Referring to FIG. 8, the aerosol generating device 100 according to an embodiment may include the housing 110 including the battery accommodation space 110h, the battery 120, the printed circuit board 130, the battery protection circuit 140, and a processor 150. The components of the aerosol generating device 100 may be substantially the same as or similar to at least one of the components of the aerosol generating device 100 of FIG. 7, and redundant descriptions thereof will be omitted below.

The battery 120 may be detachably coupled to the battery accommodation space 110h, and may be electrically connected to the battery protection circuit 140 and the processor 150 when coupled to the battery accommodation space 110h.

According to an embodiment, the at least one terminal 111 electrically connected to the battery protection circuit 140 and/or the processor 150 may be disposed in the battery accommodation space 110h. For example, the at least one terminal 111 may include an electrode disposed on one side surface of the battery accommodation space 110h, but types or arrangement structure of the at least one terminal 111 is not limited thereto.

When the battery 120 is coupled to or accommodated in the battery accommodation space 110h, the electrode 121 of the battery 120 may contact the at least one terminal 111 of the battery accommodation space 110h, and the battery 120 and the at least one terminal 111 may be electrically connected to each other by contact between the battery 120 and the at least one terminal 111. As a result, as the at least one terminal 111 and the battery 120 are electrically connected to each other, the battery protection circuit 140 and/or the processor 150 may be electrically connected to the battery 120 through the at least one terminal 111.

The battery protection circuit 140 may be electrically connected to the battery 120 and protect and/or manage the battery 120. For example, the battery protection circuit 140 may cut off power supplied to the battery 120 so as to prevent overcharging of the battery 120 when the voltage of the battery 120 rises to a specified first voltage or more when charging the battery 120. As another example, the battery protection circuit 140 may cut off power supply of the battery 120 so as to prevent over-discharge of the battery 120 when the voltage of the battery 120 drops to a specified second voltage or less.

The processor 150 (e.g., the control unit 13 of FIGS. 2 to 6) may control the overall operation of the aerosol generating device 100. In an example, the processor 150 may control power supply from the battery 120 to a component (e.g., a heater) of the aerosol generating device 100 and generate an aerosol from an aerosol generating material. In another example, the processor 150 may control an operation of the battery protection circuit 140 and protect the battery 120 from overcharge, over-discharge, or the inflow of overcurrent.

According to an embodiment, the processor 150 may detect a type of the battery 120 coupled to the battery accommodation space 110h based on the characteristics of the battery 120, and control charging or discharging of the battery 120 based on the detected type of the battery 120. As the aerosol generating device 100 according to an embodiment may use various types of batteries 120 through a structure in which the battery 120 and the battery protection circuit 140 are separated from each other, the processor 150 may detect the type of the battery 120 and control charging and/or discharging of the battery 120 according to the type of the battery 120 for a stable operation of the battery 120.

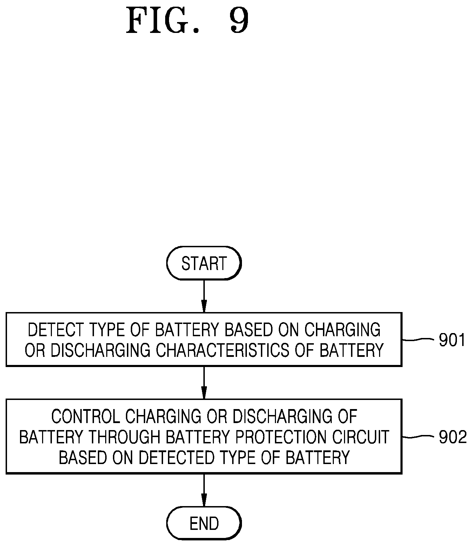

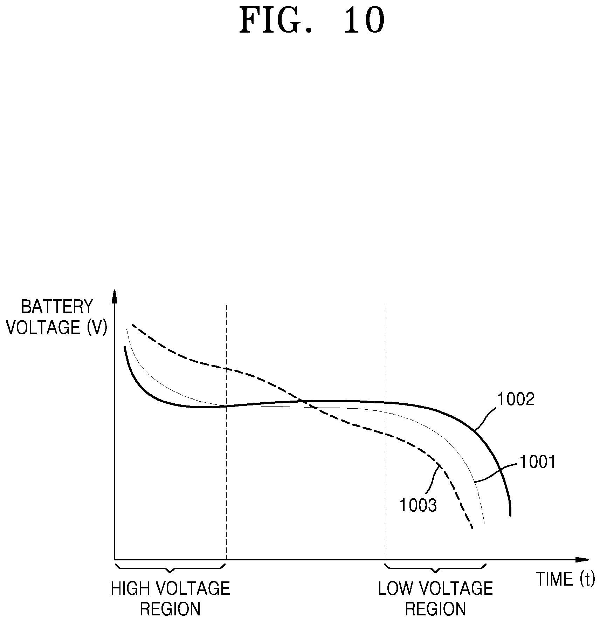

Hereinafter, operations in which the aerosol generating device 100 according to an embodiment detects a type of the battery 120 and controls charging or discharging of the battery 120 will be described with reference to FIGS. 9 and 10.

FIG. 9 is a flowchart for explaining operations of detecting a type of a battery of an aerosol generating device and controlling charging or discharging of the battery according to an embodiment. FIG. 10 is a graph illustrating a voltage change of various types of batteries over time when the batteries are discharged. In this case, in FIG. 10, a curve 1001 represents a voltage change during discharging of a first battery, a curve 1002 represents a voltage change during discharging of a second battery, and a curve 1003 represents a voltage change during discharging of a third battery.

Hereinafter, the operations of FIG. 9 will be described with reference to the components of the aerosol generating device 100 of FIG. 8.

Referring to FIGS. 9 and 10, in operation 901, the processor 150 of the aerosol generating device 100 may detect a type of the battery 120 coupled to or accommodated in the battery accommodation space 110h based on charging characteristics or discharging characteristics of the battery 120.

Charging characteristics or discharging characteristics of the battery 120 may be different according to the type of the battery 120 coupled to the battery accommodation space 110h. Accordingly, the processor 150 of the aerosol generating device 100 may detect the type of the battery 120 coupled to the battery accommodation space 110h by comparing the charging characteristics or the discharging characteristics of the battery 120 with previously stored characteristics.

In an example, a discharge rate of the battery 120 may be different according to the type of the battery 120 coupled to the battery accommodation space 110h. In the present disclosure, the 'discharge rate' may mean a voltage change rate of the battery 120 for a specified time interval when the battery 120 is discharged.

For example, as shown in FIG. 10, a discharge rate of the second battery may be lower than a discharge rate of the first battery, and a discharge rate of the third battery may be higher than the discharge rate of the first battery. Accordingly, the processor 150 may calculate the discharge rate of the battery 120 and compare the calculated discharge rate of the battery 120 with previously stored data about discharge rates of the batteries to detect the type of the battery 120.

In another example, although not shown in the drawing, when the battery 120 is charged by an external power source, the charging rate of the battery 120 may also be different according to the type of the battery 120. In the present disclosure, the 'charging rate' may mean a voltage change rate of the battery 120 for a specified time interval when the battery 120 is charged by the external power source.

For example, a charging rate of the second battery may be lower than a charging rate of the first battery, and a charging rate of the third battery may be higher than the charging rate of the first battery. Accordingly, when connection between the external power source and the battery 120 is detected, the processor 150 may calculate the charging rate of the battery 120 and compare the calculated charging rate of the battery 120 with previously stored data about the charging rate of the batteries to detect the type of the battery 120.

At this time, the data about the charging rate or the discharging rate of the batteries may mean data previously stored in the processor 150 or a memory (not shown), but is not limited thereto.

In operation 902, the processor 150 of the aerosol generating device 100 may control charging or discharging of the battery 120 based on the type of the battery 120 detected in operation 901. For example, the processor 150 may determine whether the battery 120 is overcharged or over-discharged based on the detected type of the battery 120, and may prevent the battery 120 from being overcharged or over-discharged through the battery protection circuit 140.

In an example, when it is determined that the first battery is coupled to the battery accommodation space 110h, the processor 150 may charge or discharge the first battery in accordance with the characteristics of the first battery. In another example, when it is determined that the second battery different from the first battery is coupled to the battery accommodation space 110h, the processor 150 may charge or discharge the second battery in accordance with the characteristics of the second battery.

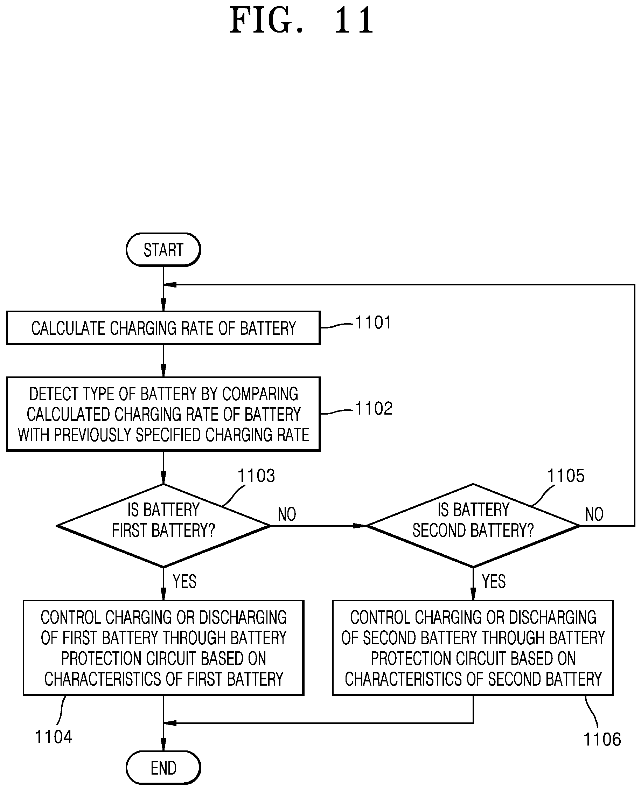

Hereinafter, operations in which the processor 150 detects the type of the battery 120 and controls the battery 120 based on the detected type of the battery 120 will be described in detail with reference to FIGS. 11 to 12.

FIG. 11 is a flowchart for explaining operations of an aerosol generating device to control charging or discharging of a battery based on a discharge rate of the battery according to an embodiment. Hereinafter, the operations of FIG. 11 will be described with reference to components of the aerosol generating device 100 of FIG. 8.

Referring to FIG. 11, in operation 1101, the processor 150 of the aerosol generating device 100 according to an embodiment may calculate a discharge rate of the battery 120 coupled to the battery accommodation space 110h. For example, during discharging of the battery 120, the processor 150 may calculate the discharge rate of the battery 120 based on a voltage change amount of the battery 120 for a specified time interval.

In operation 1102, the processor 150 may compare the discharge rate of the battery 120 calculated in operation 1101 with previously stored data about the discharge rate of batteries and detect the type of the battery 120 coupled to the battery accommodation space 110h. For example, the processor 150 may compare data about the discharge rate of batteries stored in the processor 150 or a memory (not shown) with the calculated discharge rate of the battery 120 and detect what type of battery the battery 120 is.

In operation 1103, the processor 150 may determine whether the detected battery 120 is a first battery. For example, the processor 150 may compare the discharge rate of the battery 120 calculated in operation 1101 with previously stored data about a discharge rate of the first battery and determine whether the battery 120 coupled to the battery accommodation space 110h is the first battery.

In operation 1103, when it is determined that the battery 120 is the first battery, in operation 1104, the processor 150 may control charging or discharging of the first battery through the battery protection circuit 140 based on the characteristics of the first battery.

In an example, when the voltage of the first battery is equal to or greater than a specified first reference value during charging of the first battery, the processor 150 may determine that the first battery is being overcharged and cut off power supply from an external power source to the first battery through the battery protection circuit 140. In the present disclosure, the 'specified first reference value' may refer to an upper limit value of the voltage of the first battery, which is a reference for determining whether the first battery is overcharged.

In another example, when the voltage of the first battery becomes less than or equal to a second reference value specified during discharging of the first battery, the processor 150 may determine that the first battery is being over-discharged and stop discharging the first battery through the battery protection circuit 140 to cut off power supply from the first battery to the other components of the aerosol generating device 100. In the present disclosure, the 'specified second reference value' may mean a lower limit value of the voltage of the first battery, which is a reference for determining whether the first battery is over-discharged.

On the other hand, in operation 1103, when it is determined that the battery 120 is not the first battery, in operation 1105, the processor 150 may determine whether the detected battery 120 is a second battery. For example, the processor 150 may compare the discharge rate of the battery 120 calculated in operation 1101 with previously stored data about a discharge rate of the second battery and determine whether the battery 120 coupled to the battery accommodation space 110h is the second battery.

In operation 1105, when it is determined that the battery 120 is the second battery, in operation 1106, the processor 150 may control charging or discharging of the second battery through the battery protection circuit 140 based on the characteristics of the second battery.

In an example, when the voltage of the second battery is equal to or greater than a specified third reference value during charging of the second battery, the processor 150 may determine that the second battery is being overcharged and cut off power supply from the external power source to the second battery through the battery protection circuit 140. In the present disclosure, the 'specified third reference value' may refer to an upper limit value of the voltage of the second battery, which is a reference for determining whether the second battery is overcharged, and may be different from the first reference value.

In another example, when the voltage of the second battery becomes less than or equal to a specified fourth reference value during discharging of the second battery, the processor 150 may determine that the second battery is being over-discharged and stop discharging the second battery through the battery protection circuit 140 to cut off power supply from the second battery to the other components of the aerosol generating device 100. In the present disclosure, the 'specified fourth reference value' may refer to a lower limit value of the voltage of the second battery, which is a reference for determining whether the second battery is over-discharged, and may be different from the second reference value.

In operation 1105, when it is determined that the battery 120 is not the second battery, the processor 150 may repeatedly perform operations 1101 to 1103 or detect whether the battery 120 is another type (e.g., a third battery) and control charging or discharging of the battery 120 through the battery protection circuit 140 based on the type of the battery 120.

The aerosol generating device 100 according to an embodiment may protect and/or manage various types of batteries 120 through one battery protection circuit 140 through operations 1101 to 1106 described above, thereby improving user convenience.

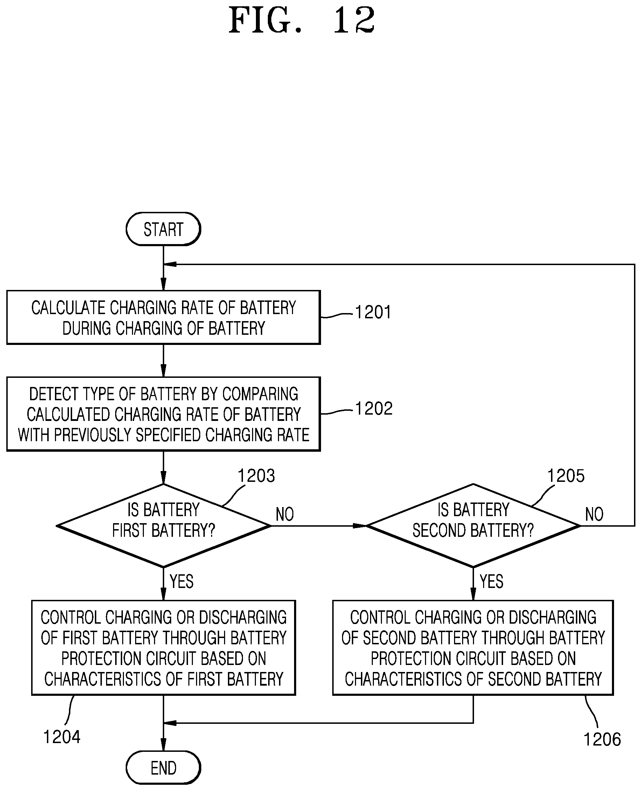

FIG. 12 is a flowchart for explaining operations of an aerosol generating device to control charging or discharging of a battery based on a charging rate of the battery according to another embodiment.

Hereinafter, the operations of FIG. 12 will be described with reference to components of the aerosol generating device 100 of FIG. 8.

Referring to FIG. 12, in operation 1201, the processor 150 of the aerosol generating device 100 according to another embodiment may calculate a charging rate of the battery 120 coupled to the battery accommodation space 110h when the battery 120 is charged from an external power source. For example, when connection between the aerosol generating device 100 and the external power source is detected, the processor 150 may calculate the charging rate of the battery 120 based on a voltage change amount of the battery 120 for a specified time interval from a time the external power source is connected.

In operation 1202, the processor 150 may compare the charging rate of the battery 120 calculated in operation 1201 with previously stored data about charging rates of batteries and detect the type of the battery 120 coupled to the battery accommodation space 110h. For example, the processor 150 may compare data about the charging rate of batteries stored in the processor 150 or a memory (not shown) with the calculated charging rate of the battery 120 and detect what type of battery the battery 120 is.

In operation 1203, the processor 150 may determine whether the detected battery 120 is a first battery. For example, the processor 150 may compare the charging rate of the battery 120 calculated in operation 1201 with previously stored data about a charging rate of the first battery and determine whether the battery 120 coupled to the battery accommodation space 110h is the first battery.

In operation 1203, when it is determined that the battery 120 is the first battery, in operation 1204, the processor 150 may control charging or discharging of the first battery through the battery protection circuit 140 based on the characteristics of the first battery. Operation 1204 may be substantially the same as or similar to operation 1104 of FIG. 11, and a redundant description thereof will be omitted below.

On the other hand, in operation 1203, when it is determined that the battery 120 is not the first battery, in operation 1205, the processor 150 may determine whether the detected battery 120 is a second battery. For example, the processor 150 may compare the charging rate of the battery 120 calculated in operation 1201 with previously stored data about a discharge rate of the second battery and determine whether the battery 120 coupled to the battery accommodation space 110h is the second battery.

In operation 1205, when it is determined that the battery 120 is the second battery, in operation 1206, the processor 150 may control charging or discharging of the second battery through the battery protection circuit 140 based on the characteristics of the second battery. Operation 1206 may be substantially the same as or similar to operation 1106 of FIG. 11, and a redundant description thereof will be omitted below.

In operation 1205, when it is determined that the battery 120 is not the second battery, the processor 150 may repeatedly perform operations 1201 to 1203 or detect whether the battery 120 is another type (e.g., a third battery) and control charging or discharging of the battery 120 through the battery protection circuit 140 based on the type of the battery 120.

The aerosol generating device 100 according to another embodiment may protect and/or manage various types of batteries 120 through one battery protection circuit 140 through operations 1001 to 1106 described above, thereby improving user convenience.

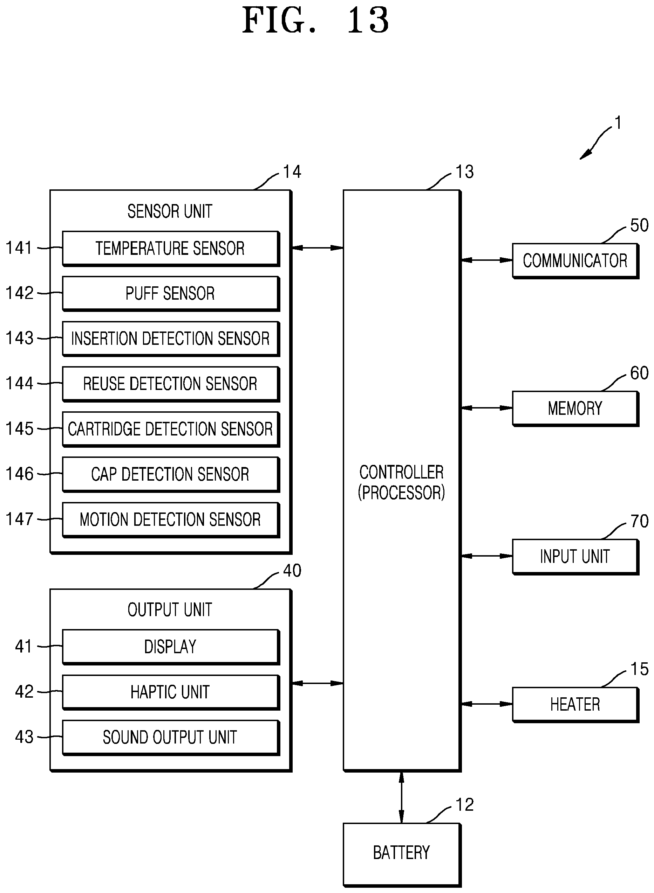

FIG. 13 is a block diagram of an aerosol generating device according to an embodiment.

The aerosol generating device 1 may include a battery 12, a controller 13, a sensor unit 14, an output unit 40, an input unit 70, a communicator 50, a memory 60, and at least one heater 15. However, an internal structure of the aerosol generating device 1 is not limited to that illustrated in FIG. 13. In other words, according to the design of the aerosol generating device 1, one of ordinary skill in the art related to the present embodiment that some of the components shown in FIG. 13 may be omitted or new components may be added.

The sensor unit 14 may detect a state of the aerosol generating device 1 or a state around the aerosol generating device 1 and transmit detected information to the controller 13. On the basis of the detected information, the controller 13 may control the aerosol generating device 1 to perform various functions such as control of operations of the cartridge heater 15 and/or the stick heater 15, a restriction on smoking, determination of whether or not the stick and/or the cartridge 19 are inserted, and a notification display.

The sensor unit 14 may include at least one of a temperature sensor 141, a puff sensor 142, an insertion detection sensor 143, a reuse detection sensor 144, a cartridge detection sensor 145, a cap detection sensor 146, and a motion detection sensor 147.

The temperature sensor 141 may detect a temperature at which the cartridge heater 15 and/or the stick heater 15 are heated. The aerosol generating device 1 may include a separate temperature sensor for detecting the temperatures of the cartridge heater 15 and/or the stick heater 15, or the cartridge heater 15 and/or the stick heater 15 may operate as temperature sensors.

The temperature sensor 141 may output a signal corresponding to the temperature of the cartridge heater 15 and/or the stick heater 15. For example, the temperature sensor 141 may include a resistor element whose resistance value changes in correspondence to a change in the temperature of the cartridge heater 15 and/or the stick heater 15. The temperature sensor 141 may be implemented by a thermistor or the like, which is an element using a property of changing resistance according to temperature. Here, the temperature sensor 141 may output a signal corresponding to the resistance value of the resistor element as a signal corresponding to the temperature of the cartridge heater 15 and/or the stick heater 15. For example, the temperature sensor 141 may include a sensor that detects a resistance value of the cartridge heater 15 and/or the stick heater 15. Here, the temperature sensor 141 may output a signal corresponding to the resistance value of the cartridge heater 15 and/or the stick heater 15 as a signal corresponding to the temperature of the cartridge heater 15 and/or the stick heater 15.

The temperature sensor 141 may be arranged around the battery 12 to monitor a temperature of the battery 12. The temperature sensor 141 may be arranged adjacent to the battery 12. For example, the temperature sensor 141 may be attached to one surface of a battery that is the battery 12. For example, the temperature sensor 141 may be mounted on one surface of a PCB.

The temperature sensor 141 may be arranged inside the body to detect an internal temperature of the body.

The puff sensor 142 may detect a puff by a user on the basis of various physical changes in an air flow path. The puff sensor 142 may output a signal corresponding to the puff. For example, the puff sensor 142 may be a pressure sensor. The puff sensor 142 may output a signal corresponding to internal pressure of the aerosol generating device 1. Here, the internal pressure of the aerosol generating device 1 may correspond to pressure of the air flow path through which a gas flows. The puff sensor 142 may be arranged in correspondence to the air flow path through which the gas flows in the aerosol generating device 1.

The insertion detection sensor 143 may detect insertion and/or removal of the stick. The insertion detection sensor 143 may detect a signal change due to the insertion and/or removal of the stick. The insertion detection sensor 143 may be installed around an insertion space. The insertion detection sensor 143 may detect the insertion and/or removal of the stick according to a change in a dielectric constant inside the insertion space. For example, the insertion detection sensor 143 may be an inductive sensor and/or a capacitance sensor.

The inductive sensor may include at least one coil. The coil of the inductive sensor may be arranged adjacent to the insertion space. For example, when a magnetic field changes around the coil through which a current flows, characteristics of the current flowing through the coil may change according to Faraday's law of electromagnetic induction. Here, the characteristics of the current flowing through the coil may include a frequency of an alternating current, a current value, a voltage value, an inductance value, an impedance value, and the like.

The inductive sensor may output a signal corresponding to the characteristics of the current flowing through the coil. For example, the inductive sensor may output a signal corresponding to an inductance value of the coil.

The capacitance sensor may include a conductor. The conductor of the capacitance sensor may be arranged adjacent to the insertion space. The capacitance sensor may output a signal corresponding to an ambient electromagnetic characteristic, e.g., a capacitance around the conductor. For example, when the stick including a metal wrapper is inserted into the insertion space, the electromagnetic characteristic around the conductor may be changed by the wrapper of the stick.

The reuse detection sensor 144 may detect whether or not the stick is reused. The reuse detection sensor 144 may be a color sensor. The color sensor may detect a color of the stick. The color sensor may detect a color of a portion of the wrapper wrapping the outside of the stick. The color sensor may detect a value for an optical characteristic corresponding to a color of an object, on the basis of light reflected from the object. For example, the optical characteristic may be a wavelength of light. The color sensor may be implemented as a single component with a proximity sensor or may be implemented as a separate component distinguished from the proximity sensor.

At least a portion of the wrapper constituting the stick may have a color changing by an aerosol. When the stick is inserted into the insertion space, the reuse detection sensor 144 may be arranged in correspondence to a location at which at least the portion of the wrapper whose color changes by the aerosol is arranged. For example, before the stick is used by the user, the color of at least the portion of the wrapper may be a first color. Here, when at least the portion of the wrapper is wetted by the aerosol while the aerosol generated by the aerosol generating device 1 passes through the stick, the color of at least the portion of the wrapper may be changed to a second color. The color of at least the portion of the wrapper may be maintained in the second color after changing from the first color to the second color.

The cartridge detection sensor 145 may detect mounting and/or removal of the cartridge 19. The cartridge detection sensor 145 may be implemented by an inductance-based sensor, a capacitive sensor, a resistance sensor, a hall sensor (a hall IC) using a hall effect, or the like.

The cap detection sensor 146 may detect mounting and/or removal of a cap. When the cap is detached from the body, a portion of the cartridge 19 and the body covered by the cap may be exposed to the outside. The cap detection sensor 146 may be implemented by a contact sensor, a hall sensor (a hall IC), an optical sensor, or the like.

The motion detection sensor 147 may detect a motion of the aerosol generating device 1. The motion detection sensor 147 may be implemented as at least one of an acceleration sensor and a gyro sensor.

In addition to the sensors 141 to 147 described above, the sensor unit 14 may further include at least one of a humidity sensor, an atmospheric pressure sensor, a magnetic sensor, a position sensor (e.g., a global positioning system (GPS)), and a proximity sensor. Functions of the respective sensors may be intuitively inferred from names thereof by one of ordinary skill in the art, and thus, detailed descriptions thereof may be omitted.

The output unit 40 may output information regarding the state of the aerosol generating device 1 and provide the information to the user. The output unit 40 may include at least one of a display 41, a haptic unit 42, and a sound output unit 43, but is not limited thereto. When the display 41 and a touch pad form a layer structure to form a touch screen, the display 41 may be used as an input device in addition to an output device.

The display 41 (e.g., display 130 of Fig.4) may visually provide the user with information regarding the aerosol generating device 1. For example, the information regarding the aerosol generating device 1 may refer to various types of information such as a charging/discharging state of the battery 12 of the aerosol-generating device 1, a preheating state of the stick heater 15, the insertion/removal state of the stick and/or the cartridge 19, the mounting/removal state of the cap, and the restriction on use of the aerosol generating device 1 (e.g., detection of an abnormal article), and the display 41 may output the information to the outside. For example, the display 41 may be in the form of a light emitting diode (LED) light emitting device. For example, the display 41 may be a liquid crystal display (LCD) panel, an organic light emitting display (OLED)panel, or the like.

The haptic unit 42 may tactilely provide the user with the information regarding the aerosol generating device 1 by converting an electrical signal into a mechanical stimulus or an electrical stimulus. For example, when initial power is supplied to the cartridge heater 15 and/or the stick heater 15 for a set time, the haptic unit 42 may generate vibration corresponding to completion of initial preheating. The haptic unit 42 may include a vibration motor, a piezoelectric element, or an electrical stimulation device.

The sound output unit 43 may audibly provide the user with the information regarding the aerosol generating device 1. For example, the sound output unit 43 may convert the electrical signal into a sound signal and output the sound signal to the outside.

The battery 12 may supply power used to operate the aerosol generating device 1. The battery 12 may supply power so that the cartridge heater 15 and/or the stick heater 15 may be heated. In addition, the battery 12 may supply power needed for operations of the sensor unit 14, the output unit 40, the input unit 70, the communicator 50, and the memory 60, which are other components provided within the aerosol generating device 1. The battery 12 may be a rechargeable battery or a disposable battery. For example, the battery 12 may be a lithium polymer (LiPoly) battery, but is not limited thereto.

Although not shown in FIG. 13, the aerosol generating device 1 may further include a power protection circuit. The power protection circuit may be electrically connected to the battery 12 and may include a switching element.

The power protection circuit may cut off an electrical path for the battery 12 according to a certain condition. For example, the power protection circuit may cut off the electrical path for the battery 12 when a voltage level of the battery 12 is a first voltage or more corresponding to overcharging. For example, the power protection circuit may cut off the electrical path for the battery 12 when the voltage level of the battery 12 is less than a second voltage corresponding to overdischarge.

The stick heater 15 may be supplied with power from the battery 12 and heat a medium or an aerosol generating material within the stick. Although not shown in FIG. 13, the aerosol generating device 1 may further include a power conversion circuit (e.g., a DC/DC converter) that converts power of the battery 12 and supplies the converted power to the cartridge heater 15 and/or the stick heater 15. In addition, when the aerosol generating device 1 generates an aerosol by an induction heating method, the aerosol generating device 1 may further include a DC/AC converter that converts DC power of the battery 12 into AC power.

The controller 13, the sensor unit 14, the output unit 40, the input unit 70, the communicator 50, and the memory 60 may be supplied with power from the battery 12 to perform functions. Although not shown in FIG. 13, the aerosol generating device 1 may further include a power conversion circuit that converts power of the battery 12 and supplies the power to each of components, e.g., a low-dropout (LDO) circuit or a voltage regulator circuit. Also, although not shown in FIG. 13, a noise filter may be provided between the battery 12 and the stick heater 15. The noise filter may be a low pass filter. The low pass filter may include at least one inductor and a capacitor. A cutoff frequency of the low pass filter may correspond to a frequency of a high-frequency switching current applied from the battery 12 to the stick heater 15. The low pass filter may prevent a high-frequency noise component from being applied to the sensor unit 14, such as the insertion detection sensor 143.

In an embodiment, the cartridge heater 15 and/or the stick heater 15 may be formed of any suitable electrically resistive material. For example, the suitable electrically resistive material may be a metal or a metal alloy including titanium, zirconium, tantalum, platinum, nickel, cobalt, chromium, hafnium, niobium, molybdenum, tungsten, tin, gallium, manganese, iron, copper, stainless steel, or nichrome, but is not limited thereto. In addition, the stick heater 15 may be implemented by a metal wire, a metal plate on which an electrically conductive track is arranged, or a ceramic heating element, but is not limited thereto.

In an embodiment, the stick heater 15 may include an induction heater. For example, the stick heater 15 may include a susceptor that generates heat through a magnetic field applied by a coil to heat an aerosol generating material.

The input unit 70 may receive information input from the user or output the information to the user. For example, the input unit 70 may be a touch panel. The touch panel may include at least one touch sensor for detecting a touch. For example, the touch sensor may include a capacitive touch sensor, a resistive touch sensor, a surface acoustic touch sensor, an infrared touch sensor, or the like, but is not limited thereto.

The display 41 and the touch panel may be implemented as one panel. For example, the touch panel may be inserted into the display 41 (e.g., may be a on-cell type or in-cell type). For example, the touch panel may be added on the display 41 (e.g., may be an add-on type).

Meanwhile, the input unit 70 may include a button, a keypad, a dome switch, a jog wheel, a jog switch, or the like, but is not limited thereto.

The memory 60 may be hardware for storing various types of data processed within the aerosol generating device 1 and may store pieces of data processed by the controller 13 and pieces of data to be processed by the controller 13. The memory 60 may include at least one type of storage medium from among a flash memory type, a hard disk type, a multimedia card micro type, a card type memory (e.g., a SD or XD memory or the like), random access memory (RAM), static random access memory (SRAM), read-only memory (ROM), electrically erasable programmable read-only memory (EEPROM), programmable read-only memory (PROM), a magnetic memory, a magnetic disk, and an optical disk. The memory 60 may store data or the like regarding an operation time of the aerosol generating device 1, the maximum number of puffs, the current number of puffs, at least one temperature profile, and a smoking pattern of the user.

The communicator 50 may include at least one component for communication with another electronic device. For example, the communicator 50 may include at least one of a short-range wireless communication unit and a wireless communication unit.

The short-range wireless communication unit may include a Bluetooth communication unit, a Bluetooth low energy (BLE) communication unit, a near field communication unit, a wireless local area network ((WLAN) (Wi-Fi)) communication unit, a Zigbee communication unit, an infrared data association (IrDA) communication unit, a Wi-Fi Direct (WFD) communication unit, an ultra wideband (UWB) communication unit, an Ant+ communication unit, and the like, but is not limited thereto.

The wireless communication unit may include a cellular network communication unit, an Internet communication unit, a computer network (e.g., LAN or WAN) communication unit, and the like, but is not limited thereto.

Although not shown in FIG. 13, the aerosol generating device 1 may further include a connection interface such as a universal serial bus (USB) interface, and may connect with another external device through the connection interface such as a USB interface to transmit and receive information or charge the power 11.

The controller 13 may control an overall operation of the aerosol generating device 1. In an embodiment, the controller 13 may include at least one processor. The processor may be implemented as an array of a plurality of logic gates or may be implemented as a combination of a general-purpose microprocessor and a memory that stores a program executable by the microprocessor. In addition, one of ordinary skill in the art to which the present embodiment pertains may understand that the processor may be implemented as other types of hardware.

The controller 13 may control the temperature of the stick heater 15 by controlling supply power from the battery 12 to the stick heater 15. The controller 13 may control the temperature of the cartridge heater 15 and/or the stick heater 15 on the basis of the temperature of the cartridge heater 15 and/or the stick heater 15 sensed by the temperature sensor 141. The controller 13 may adjust power supplied to the cartridge heater 15 and/or the stick heater 15, on the basis of the temperature of the cartridge heater 15 and/or the stick heater 15. For example, the controller 13 may determine a target temperature for the cartridge heater 15 and/or the stick heater 15, on the basis of a temperature profile stored in the memory 60.

The aerosol generating device 1 may include a power supply circuit (not shown) electrically connected to the battery 12 between the battery 12 and the cartridge heater 15 and/or the stick heater 15. The power supply circuit may be electrically connected to the cartridge heater 15, the stick heater 15, or an induction coil 181. The power supply circuit may include at least one switching element. The switching element may be implemented by a bipolar junction transistor (BJT), a field effective transistor (FET), or the like. The controller 13 may control the power supply circuit.

The controller 13 may control power supply by controlling switching of the switching element of the power supply circuit. The power supply circuit may be an inverter that converts DC power output from the battery 12 into AC power. For example, the inverter may include a full-bridge circuit or a half-bridge circuit including a plurality of switching elements.

The controller 13 may turn on the switching element so that power is supplied from the battery 12 to the cartridge heater 15 and/or the stick heater 15. The controller 13 may turn off the switching element to cut off the supply of power to the cartridge heater 15 and/or the stick heater 15. The controller 13 may adjust a current supplied from the battery 12 by adjusting a frequency and/or duty ratio of a current pulse input into the switching element.

The controller 13 may control a voltage output from the battery 12 by controlling switching of the switching element of the power supply circuit. The power conversion circuit may convert the voltage output from the battery 12. For example, the power conversion circuit may include a buck-converter that steps down the voltage output from the battery 12. For example, the power conversion circuit may be implemented through a buck-boost converter, a zener diode, or the like.

The controller 13 may adjust a level of the voltage output from the power conversion circuit by controlling an on/off operation of the switching element included in the power conversion circuit. When the switching element continues to be turned on, the level of the voltage output from the power conversion circuit may correspond to a level of a voltage output from the battery 12. The duty ratio for the on/off operation of the switching element may correspond to a ratio of the voltage output from the power conversion circuit to the voltage output from the battery 12. The level of the voltage output from the power conversion circuit may decrease with a decrease in the duty ratio for the on/off operation of the switching element. The stick heater 15 may be heated on the basis of the voltage output from the power conversion circuit.

The controller 13 may control power to be supplied to the stick heater 15 by using at least one of a pulse width modulation (PWM) method and a proportional-integral-differential (PID) method.

For example, the controller 13 may control a current pulse having a certain frequency and duty ratio to be supplied to the stick heater 15 by using the PWM method. The controller 13 may control the power supplied to the stick heater 15 by adjusting the frequency and duty ratio of the current pulse.

For example, the controller 13 may determine a target temperature to be controlled, on the basis of the temperature profile. The controller 13 may control the power supplied to the stick heater 15 by using the PID method, which is a feedback control method through a difference value between the temperature of the stick heater 15 and the target temperature, a value obtained by integrating the difference value over time, and a value obtained by differentiating the difference value over time.

The controller 13 may prevent the cartridge heater 15 and/or the stick heater 15 from overheating. For example, on the basis that the temperature of the cartridge heater 15 and/or the stick heater 15 exceeds a preset limit temperature, the controller 13 may control an operation of the power conversion circuit so that the supply of power to the cartridge heater 15 and/or the stick heater 15 stops. For example, on the basis that the temperature of the cartridge heater 15 and/or the stick heater 15 exceeds the preset limit temperature, the controller 13 may reduce an amount of power supplied to the cartridge heater 15 and/or the stick heater 15 by a certain ratio. For example, on the basis that the temperature of the cartridge heater 15 exceeds the preset limit temperature, the controller 13 may determine that the aerosol generating material accommodated in the cartridge 19 is exhausted and cut off the power supply to the cartridge heater 15.

The controller 13 may control charging and discharging of the battery 12. The controller 13 may identify the temperature of the battery 12 on the basis of an output signal of the temperature sensor 141.

When a power line is connected to a battery terminal of the aerosol generating device 1, the controller 13 may identify whether or not the temperature of the battery 12 is a first limit temperature or more which is a reference for blocking charging of the battery 12. When the temperature of the battery 12 is less than the first limit temperature, the controller 13 may control the battery 12 to be charged, on the basis of a preset charging current. The controller 13 may block charging of the battery 12 when the temperature of the battery 12 is the first limit temperature or more.

While the power of the aerosol generating device 1 is turned on, the controller 13 may identify whether or not the temperature of the battery 12 is a second limit temperature or more which is a reference for blocking discharge of the battery 12. The controller 13 may control power stored in the battery 12 to be used when the temperature of the battery 12 is less than the second limit temperature. When the temperature of the battery 12 is the second limit temperature or more, the controller 13 may stop using the power stored in the battery 12.

The controller 13 may calculate a remaining capacity of the power stored in the battery 12. For example, the controller 13 may calculate the remaining capacity of the battery 12 on the basis of a voltage and/or current sensing value of the battery 12.

The controller 13 may determine, through the insertion detection sensor 143, whether or not the stick is inserted into the insertion space. The controller 13 may determine that the stick is inserted, on the basis of the output signal of the insertion detection sensor 143. When determining that the stick is inserted into the insertion space, the controller 13 may control power to be supplied to the cartridge heater 15 and/or the stick heater 15. For example, the controller 13 may supply power to the cartridge heater 15 and/or the stick heater 15, on the basis of the temperature profile stored in the memory 60.

The controller 13 may determine whether or not the stick is removed from the insertion space. For example, the controller 13 may determine, through the insertion detection sensor 143, whether or not the stick is removed from the insertion space. For example, when the temperature of the stick heater 15 is the preset limit temperature or more or when a temperature change gradient of the stick heater 15 is a set gradient, the controller 13 may determine that the stick is removed from the insertion space. When determining that the stick is removed from the insertion space, the controller 13 may cut off the supply of power to the cartridge heater 15 and/or the stick heater 15.

The controller 13 may control a power supply time and/or a power supply amount with respect to the stick heater 15, according to a state of the stick detected by the sensor unit 14. The controller 13 may identify, on the basis of a look-up table, a level range including a level of a signal of the capacitance sensor. The controller 13 may determine an amount of moisture in the stick, according to the identified level range.

When the stick is over-humidified, the controller 13 may increase a preheating time of the stick compared to a normal state by controlling the power supply time with respect to the stick heater 15.

The controller 13 may determine, through the reuse detection sensor 144, whether or not the stick inserted into the insertion space is reused. For example, the controller 13 may compare a sensing value of a signal of the reuse detection sensor 144 with a first reference range including a first color and when the sensing value is included in the first reference range, determine that the stick is not used. For example, the controller 13 may compare the sensing value of the signal of the reuse detection sensor 144 with a second reference range including a second color and when the sensing value is included in the second reference range, determine that the stick is used. When determining that the stick is used, the controller 13 may cut off the supply of power to the cartridge heater 15 and/or the stick heater 15.

The controller 13 may determine, through the cartridge detection sensor 145, whether or not the cartridge 19 is coupled and/or removed. For example, the controller 13 may determine whether or not the cartridge 19 is coupled or removed, on the basis of a sensing value of the signal of the cartridge detection sensor 145.

The controller 13 may determine whether or not the aerosol generating material of the cartridge 19 is exhausted. For example, the controller 13 may apply power to preheat the cartridge heater 15 and/or the stick heater 15, determine whether or not the temperature of the cartridge heater 15 exceeds the limit temperature in a preheating period, and when the temperature of the cartridge heater 15 exceeds the limit temperature, determine that the aerosol generating material of the cartridge 19 is exhausted. When determining that the aerosol generating material of the cartridge 19 is exhausted, the controller 13 may cut off the supply of power to the cartridge heater 15 and/or the stick heater 15.

The controller 13 may determine whether or not the cartridge 19 may be usable. When the current number of puffs is greater than or equal to the maximum number of puffs set in the cartridge 19, the controller 13 may determine, on the basis of data stored in the memory 60, that the cartridge 19 may not be usable. For example, when the total time for which the heater 24 is heated is a preset maximum time or more or the total amount of power supplied to the heater 24 is a preset maximum amount of power or more, the controller 13 may determine that the cartridge 19 may not be usable.

The controller 13 may determine inhalation by the user through the puff sensor 142. For example, the controller 13 may determine whether or not a puff occurs, on the basis of a sensing value of a signal of the puff sensor 142. For example, the controller 13 may determine an intensity of the puff, on the basis of the sensing value of the signal of the puff sensor 142. When the number of puffs reaches the preset maximum number of puffs or when puffs are not detected for a preset time or more, the controller 13 may cut off the supply of power to the cartridge heater 15 and/or the stick heater 15.

The controller 13 may determine, through the cap detection sensor 146, whether a cap is coupled and/or removed. For example, the controller 13 may determine whether or not the cap is coupled and/or removed, on the basis of a sensing value of a signal of the cap detection sensor 146.

The controller 13 may control the output unit 40 on the basis of the result of detection by the sensor unit 14. For example, when the number of puffs counted through the puff sensor 142 reaches a preset number, the controller 13 may notify the user that the aerosol generating device 1 is soon terminated, through at least one of the display 41, the haptic unit 42, and the sound output unit 43. For example, the controller 13 may notify the user through the output unit 40 that the stick is not present in the insertion space, on the basis of the determination that the stick is not present in the insertion space. For example, the controller 13 may notify the user through the output unit 40 that the cartridge 19 and/or the cap are not mounted, on the basis of the determination that the cartridge 19 and/or the cap are not mounted. For example, the controller 13 may transmit information regarding the temperature of the cartridge heater 15 and/or the stick heater 15 to the user through the output unit 40.

The controller 13 may store and update, in the memory 60, a history of a certain event that occurs, on the basis of the occurrence of the event. The event may include detection of insertion of the stick, initiation of heating of the stick, detection of puffs, termination of the puffs, detection of overheating of the cartridge heater 15 and/or the stick heater 15, detection of application of an overvoltage to the cartridge heater 15 and/or the stick heater 15, termination of heating of the stick, an operation such as power on/off of the aerosol generating device 1, initiation of charging of the battery 12, detection of overcharging of the battery 12, termination of charging of the battery 12, and the like. The history of the event may include a date and time when the event occurs, log data corresponding to the event, and the like. For example, when the certain event is the detection of insertion of the stick, the log data corresponding to the event may include data regarding the sensing value of the insertion detection sensor 143 and the like. For example, when the certain event is the detection of overheating of the cartridge heater 15 and/or the stick heater 15, the log data corresponding to the event may include data regarding the temperature of the cartridge heater 15 and/or the stick heater 15, the voltage applied to the cartridge heater 15 and/or the stick heater 15, a current flowing through the cartridge heater 15 and/or the stick heater 15, and the like.

The controller 13 may control to form a communication link with an external device such as a mobile terminal of the user. When data regarding authentication is received from the external device through the communication link, the controller 13 may release a restriction on use of at least one function of the aerosol generating device 1. Here, the data regarding the authentication may include data indicating completion of user authentication for the user corresponding to the external device. The user may perform the user authentication through the external device. The external device may determine whether or not user data is valid, on the basis of the birthday of the user, a unique number indicating the user, and the like and receive, from an external server, data regarding use authority over the aerosol generating device 1. The external device may transmit the data indicating the completion of the user authentication to the aerosol generating device 1, on the basis of the data regarding the use authority. When the user authentication is completed, the controller 13 may release the restriction on the use of at least one function of the aerosol generating device 1. For example, when the user authentication is completed, the controller 13 may release a restriction on use of a heating function of supplying power to the stick heater 15.

The controller 13 may transmit data regarding the state of the aerosol generating device 1 to the external device through the communication link formed with the external device. On the basis of the received data regarding the state of the aerosol generating device 1, the external device may output the remaining capacity of the battery 12 of the aerosol generating device 1, an operation mode, and the like through a display of the external device.

The external device may transmit a location search request to the aerosol generating device 1, on the basis of an input for initiating a location search of the aerosol generating device 1. When receiving the location search request from the external device, the controller 13 may control at least one of output devices to perform an operation corresponding to the location search, on the basis of the received location search request. For example, the haptic unit 42 may generate vibration in response to the location search request. For example, the display 41 may output an object corresponding to the location search and an end of the search in response to the location search request.

When receiving firmware data from the external device, the controller 13 may control to perform a firmware update. The external device may identify a current version of firmware of the aerosol generating device 1 and determine whether or not a new version of the firmware is present. When an input for requesting firmware download is received, the external device may receive a new version of firmware data and transmit the new version of firmware data to the aerosol generating device 1. When receiving the new version of firmware data, the controller 13 may control the firmware update of the aerosol generating device 1 to be performed.

The controller 13 may transmit data regarding a sensing value of at least one sensor unit 14 to the external server (not shown) through the communicator 50, and receive from the server and store a learning model generated by learning the sensing value through machine learning such as deep learning. The controller 13 may perform an operation of determining an inhalation pattern of the user, an operation of generating a temperature profile, and the like by using the learning model received from the server. The controller 13 may store, in the memory 60, sensing value data of at least one sensor unit 14, data for training an artificial neural network (ANN), and the like. For example, the memory 60 may store a database for each component provided in the aerosol generating device 1, which is for training the ANN, and weights and biases constituting the structure of the ANN. The controller 13 may generate at least one learning model used for determining the inhalation pattern of the user, generating the temperature profile, and the like, by learning data regarding the sensing value of the at least one sensor unit 14, the inhalation pattern of the user, the temperature profile, and the like which are stored in the memory 60.

Some embodiments or other embodiments of the disclosure described above are not exclusive or distinct from each other. In some embodiments or other embodiments of the disclosure described above, respective components or functions may be used in combination with one another or combined with one another.

For example, a component A described in a particular embodiment and/or drawing and a component B described in another embodiment and/or drawing may be combined with each other. In other words, even when coupling between components is not directly described, the coupling may be made except when the coupling is described as impossible.

The above description should not be construed as being limited in all respects but should be considered illustrative. The scope of the disclosure should be determined by the logical interpretation of appended claims, and all changes within the equivalent scope of the disclosure are included in the scope of the disclosure.

## Claims

1. An aerosol generating device comprising:
a housing comprising a battery accommodation space;
a heater located inside the housing and configured to heat an aerosol generating material;
a battery detachably coupled to the battery accommodation space and configured to supply power to the heater;
a printed circuit board disposed inside the housing and spaced apart from the battery accommodation space; and
a battery protection circuit disposed on the printed circuit board and electrically connected to the battery when the battery is coupled to the battery accommodation space to control charging or discharging of the battery.

2. The aerosol generating device of claim 1, further comprising:
at least one terminal disposed in the battery accommodation space and connected to an electrode of the battery when the battery is coupled to the battery accommodation space.

3. The aerosol generating device of claim 2, wherein
the battery protection circuit is connected to the at least one terminal and electrically connected to the battery through the one or more terminals when the battery is coupled to the battery accommodation space.

4. The aerosol generating device of claim 1, wherein
the battery protection circuit is spaced apart from the heater by a certain distance.

5. The aerosol generating device of claim 1, further comprising:
a processor electrically connected to the battery and the battery protection circuit,
wherein the processor is configured to detect a type of the battery based on charging or discharging characteristics of the battery coupled to the battery accommodation space.

6. The aerosol generating device of claim 5, wherein
the processor is configured to: calculate a discharge rate of the battery coupled to the battery accommodation space; and
detect the type of battery coupled to the battery accommodation space by comparing the calculated discharge rate of the battery with a previously stored discharge rate.

7. The aerosol generating device of claim 5, wherein
the processor is configured to: calculate a charging rate of the battery when the battery coupled to the battery accommodation space is charged by an external power source; and
detect the type of battery coupled to the battery accommodation space by comparing the calculated charging rate of the battery with a previously stored charging rate.

8. The aerosol generating device of claim 5, wherein
the processor is configured to control charging or discharging of the battery through the battery protection circuit based on the detected type of the battery.

9. The aerosol generating device of claim 8, wherein
the processor is configured to:
cut off power supply to a first battery through the battery protection circuit when the battery is the first battery, and a voltage of the first battery is equal to or greater than a specified first reference value during charging of the battery; and
stop discharging the first battery through the battery protection circuit when the voltage of the first battery is less than or equal to a specified second reference value during discharging of the first battery.

10. The aerosol generating device of claim 9, wherein:
the processor is configured to:
cut off power supply to a second battery through the battery protection circuit when the battery is a second battery different from the first battery and a voltage of the second battery is greater than or equal to a specified third reference value during charging of the second battery; and
stop discharging the second battery through the battery protection circuit when the voltage of the second battery is less than or equal to a specified fourth reference value during discharging of the second battery.

11. A method of operating an aerosol generating device, the method comprising:
detecting a type of a battery coupled to a battery accommodation space of the aerosol generating device based on charging or discharging characteristics of the battery detachably coupled to the battery accommodation space; and
controlling charging or discharging of the battery through a battery protection circuit electrically connected to the battery when the battery is coupled to the battery accommodation space based on the detected type of the battery.

12. The method of claim 11, wherein
the detecting of the type of battery includes
calculating a discharge rate of the battery coupled to the battery accommodation space; and
detecting the type of battery coupled to the battery accommodation space by comparing the calculated discharge rate of the battery with a previously stored discharge rate.

13. The method of claim 11, wherein
the detecting of the type of battery includes
calculating a charging rate of the battery when the battery coupled to the battery accommodation space is charged by an external power source; and
detecting the type of battery coupled to the battery accommodation space by comparing the calculated charging rate of the battery with a previously stored charging rate.

14. The method of claim 11, wherein
the controlling of the charging or discharging of the battery includes
cutting off power supply to a first battery through the battery protection circuit when the battery is the first battery and a voltage of the first battery is equal to or greater than a specified first reference value during charging of the battery; and
stopping discharging the first battery through the battery protection circuit when the voltage of the first battery is less than or equal to a specified second reference value during discharging of the first battery.

15. The method of claim 14, wherein
the controlling of the charging or discharging of the battery includes
cutting off power supply to a second battery through the battery protection circuit when the battery is a second battery different from the first battery and a voltage of the second battery is greater than or equal to a specified third reference value during charging of the second battery; and
stopping discharging the second battery through the battery protection circuit when the voltage of the second battery is less than or equal to a specified fourth reference value during discharging of the second battery.
